# EUROPÄISCHE PATENTSCHRIFT

(11) **EP 1 180 672 B1**
(45) Veröffentlichungstag und Bekanntmachung des Hinweises auf die Patenterteilung: **01.02.2006**
(21) Anmeldenummer: 01117247.5
(22) Anmeldetag: 17.07.2001
(51) Int. Cl.: G01L 9/00, G01L 1/22

(54) **Drucksensor**
Pressure sensor
Capteur de pression

(30) Priorität: 25.07.2000 DE 10036474
(43) Veröffentlichungstag der Anmeldung: 20.02.2002
(73) Patentinhaber: AB Elektronik Sachsen GmbH, 01738 Klingenberg (DE)
(72) Erfinder: Bojarski, Aldo, 01774 Obercunnersdorf (DE); Dietze, Klaus, 01738 Colmnitz (DE); Fichte, Werner, 01738 Colmnitz (DE); Leonhardt, Ulrich, 01774 Pretzschendorf (DE)
(74) Vertreter: Hoffmeister, Helmut

(56) Entgegenhaltungen:
- DE-A- 3 200 448
- DE-A- 19 637 763
- DE-A- 19 840 829
- GB-A- 2 043 907
- US-A- 4 545 255

## Beschreibung

Die Erfindung betrifft eine Druckmessvorrichtung, die ein Trägerkörperelement mit einer gegenüber dem Trägerkörperelement verbiegbaren Hauptzunge aufweist, entsprechend dem Oberbegriff des Anspruches 1.

Eine Vorrichtung der vorstehend genannten Art ist aus der US 4,542,255 bekannt. Das Trägerkörperelement hat die Form einer Kreisscheibe, in die mit einem konzentrischen, fast umlaufenden Zungenschnitt ausgehend von beiden Seiten eine Biegelinie eingeschnitten ist, so dass eine Zunge entsteht, die nur über einen schmalen, elastischen Steg mit dem Rest der Kreisscheibe verbunden ist. Im Bereich des Steges sind Zugsensoren (strain gauges) in Halbleiter-Bauweise oder Widerstandselemente (foil strain gauges) angebracht, die in Verbindung mit einer Halbbrücken-Schaltung Gleichspannungssignale proportional zur Dehnung erzeugen.

Nachteilig bei dieser Messanordnung ist, dass nur ein Signal auf der momentanen Dehnung oder Stauchung beruht, so dass eine hochwertige Wheatstone-Brücke mit guter Unterdrückung von Temperatur- und Offsetfehlern nur schwer realisierbar ist.

Aus der US 4,576,052 ist eine Trägerplatte aus Silizium bekannt, auf der auf einer Membranfläche vier Widerstände angeordnet sind, die zu einer Wheatstone-Brücke zusammengeschaltet sind. In das Siliziumplättchen sind darüber hinaus weitere Schaltkreiselemente eingebracht.

Nachteilig ist, dass die Widerstände in verschiedenen Biegezonen angeordnet sind. Darüber hinaus wird die Membran durch die auftretende Kraftbelastung nur verformt. Hierdurch wird die Genauigkeit und die Linearität der Wandlerfunktion beeinträchtigt.

Bei einer Halbleiterdruckwandleranordnung nach DE 32 00 448 A1 ist ein Membranteil auf einer Trägerplatte vakuumdicht befestigt. Die Membran aus einer einkristallinen Siliciumscheibe weist mehrere Flächenabschnitte auf, die jedoch nicht in Form von Haupt- und Zusatzzunge gestaltet sind. Eine Dehnung in einem Stegabschnitt wird nicht genutzt. Eine ähnliche Anordnung zeigt DE 196 37 763 A1.

Ein Differentialdruck-Sensor ist aus GB 2 043 907 A bekannt. Der Messeffekt beruht auf einer sternförmig eingeschnittenen Scheibe, bei der sich kranzförmig angeordnete, biegsame Zungen ergeben. Im Biegebereich der Zungen liegen gegenüberliegend Messwandler (strain gauges) auf, deren Werte über eine Brückenschaltung aufgenommen werden. Nachteilig bei dieser Anordnung ist, dass sich wegen der starken Verjüngung des Messortes an den Zungen sich Messwerte nur schwer reproduzierbar machen lassen.

Ein Verfahren zum Befestigen eines mikromechanischen Sensors mithilfe eines Gels ist aus DE 198 40 829 A1 bekannt. Diese Technik wird demnach als Stand der Technik vorausgesetzt.

Es stellt sich die Aufgabe, eine Vorrichtung der eingangs genannten Art so weiter zu entwickeln, dass die Messgenauigkeit und Reproduzierbarkeit erhöht sind, insbesondere eine volle Wheatstone-Brücke zur Auswertung von Signalen einsetzbar ist, so dass sich genauere Messwerte ergeben.

Erfindungsgemäß wird diese Aufgabe durch die Merkmale des Anspruches 1 gelöst.

Vorteilhafte Ausgestaltungen der Erfindung sind in den abhängigen Ansprüchen 2-14 definiert.

In das Trägerkörperelement ist entlang einer Hauptzungen-Schnittlinie bis zur Biegelinie eine Hauptzunge und der Hauptzunge gegenüberliegend entlang einer Zusatzschnittlinie bis zur Biegelinie eine Zusatzzunge eingeschnitten worden. Hierdurch entsteht ein Zwei-Zungen-Biegebalken mit Ringträgerelement, das die Biege- und Stauchzonen mit den Brückenwiderständen ringförmig umschließt, was für die Montage des Drucksensors vorteilhaft ist, dass damit eine Dichtfläche zur Verfügung steht, die die Anwendung des Biegebalkens in Druckmesseinrichtungen ermöglicht. Durch die Anordnung der zug- bzw. druckempfindlichen Widerstände in der Stauch- und den gegenüberliegenden Streckzonen läßt sich eine Wheatstone-Brücke aufbauen, die genaueste Messwerte ermittelt.

In der Biegelinie können in einer Streckzone zwischen der Schnittlinie und danebenliegenden Stauchzonen Widerstandselemente angeordnet sein. Hierdurch ergeben sich für den Zwei-Zungen-Biegebalken jeweils zwei Möglichkeiten für die Zusammenschaltung von Wheatstone-Brücken.

In der ersten Realisierungsmöglichkeit kann ein Widerstandselement in der Stauchzone und ein Widerstandselement in einer der Streckzonen angeordnet sein. Hierdurch steht eine Halbbrücke mit einer entsprechenden Signalausbeute zur Verfügung.

In der zweiten Realisierungsmöglichkeit können in der Streckzone zwei Widerstandselemente und rechts und links von der Streckzone neben der Zungenschnittlinie in einer Stauchzone ein Widerstandselement und in einer weiteren Stauchzone ein weiteres Widerstandselement angeordnet sein. Hierdurch läßt sich eine volle Wheatstone-Brücke mit hoher und genauer Signalausbeute realisieren.

Die Spaltdicke der Hauptzungen-Schnittlinie und der Zusatzzungen-Schnittlinie können zwischen 0,001 bis 2,0 mm betragen. Als fertigungstechnisch realisierbare und günstige Spaltdicke hat sich 0,1 mm in Dickschichttechnik erwiesen erwiesen.

Für die Realisierung der Wheatstone-Brücke mit Hilfe der Widerstandselemente bieten sich als Fertigungstechniken an:
a) Dickfilm-Technik
   Die Dickfilm-Technik ist eine Form der Schichttechnik, bei der die Schichtdicke um 30 µ liegt. Es werden entsprechende Substrate für die Ausbildung der Widerstandselemente und der Leiterbahnen zum Einsatz gebracht.
b) Dünnfilm-Technik
   Bei der Dünnfilm-Technik betragen die Schichtdicken einen Größenbereich von 10 bis 500 nm zur Herstellung der Widerstandselemente und Leiterbahnen. In der Dünnfilm-Technik werden Verfahren der Aufdampfungstechnik und der Ionenstrahlzerstäubung angewandt. Mittels chemischer Behandlung ist es danach möglich, aus bereits aufgebrachten Schichten durch chemische Reaktionen neue Schichten zu bilden.
c) Silizium-Technik
   Hier werden die Widerstandselemente und Leiterbahnen in speziellen Oberflächenbehandlungsverfahren eingebracht. Von Vorteil ist es, dass hierbei Halbleiter-Bauelemente, zum Beispiel Transistoren, Dioden, und dergleichen zur Realisierung integrierter Schaltkreise mit vorgesehen werden können. Im Ergebnis entsteht ein integrierter Schaltkreis, der entsprechend verbondet und gehäust werden kann.

Für die Kapselung der Trägerkörperelemente mit den Widerstandselementen und den Zungenabschnitten bestehen zwei Möglichkeiten.

Die erste Möglichkeit besteht darin, dass auf der Auflage- und Dichtfläche des Trägerkörperelements ein erstes umlaufendes elastisches Dichtungselement und auf der der Auflage- und Dichtfläche gegenüberliegenden Fläche ein zweites elastisches Dichtungselement aufgelegt wird. Das Gehäuseelement in diesem Fall als ein Gehäusekörper ausgebildet, der wenigstens teilweise durch ein erstes Basiskörperelement verschlossen werden kann, wobei das erste elastische Dichtungselement vom Gehäusekörper und das zweite elastische Dichtungselement vom Basiskörper an das Trägerkörperelement eingedrückt wird.

Die zweite Variante besteht darin, dass auf der Auflage- und Dichtfläche des Trägerkörperelements ein drittes umlaufendes elastisches Dichtungselement und auf der der Auflage- und Dichtfläche gegenüberliegenden Fläche ein umlaufendes Unterlegringelement mit eingearbeiteter Aussparung als Anschlag und Überlastsicherung für das Zungenelement anzuordnen. Das Messgehäuseelement ist in diesem Fall als Deckelkörper ausgebildet, der gegenüber einem zweiten Basiskörperelement angeordnet sein kann, wobei das dritte Dichtungselement vom Dekkelkörper und das Unterlegringelement vom zweiten Basiskörperelement angedrückt werden kann.

Der Gelschichtkörper ist dabei vom ersten bzw. vom zweiten elastischen Dichtungselement umfaßt. Das erste, zweite und dritte elastische Dichtungselement ist jeweils als Ringdichtungselement mit einem im wesentlichen runden Querschnitt ausgebildet. Als Material für dieses Dichtungselement kommen Gummi, Silikonmasse oder dergleichen zum Einsatz. Das Unterlegringelement kann, entsprechende Dimensionierung vorausgesetzt, Teil des Deckelkörpers sein. Die Überlastsicherung muß nicht unbedingt in die Scheibe integriert werden. Bei Auftreten von Unterdruck kann sich eine Überlastsicherung auch im Deckelkörper befinden. Zum Ausgleich von Fertigungstoleranzen kann es sinnvoll sein, die Überlastsicherung einstellbar zu gestalten.

Die Verbindung zwischen den einzelnen Teilen kann durch übliche Verbindungsverfahren, wie Schrauben, Bördeln, Schweißen, Kleben oder dergleichen erfolgen.

Der Gehäusekörper und der Deckelkörper können einen Anschlußhohlkörper aufweisen. Über diesen Hohlkörper wird durch das zu messende Medium eine entsprechende Kraft ausgeübt, die dann durch die Wheatstone-Brücke in ein elektrisches Signal umgewandelt wird.

Der Gelschichtkörper kann aus einem dielektrischen Silicongel bestehen. Von besonderer Bedeutung ist, dass hier ein Material, das speziell zum Schutz von elektronischen Schaltkreisen konzipiert wurde, in einen vollkommen neuen Anwendungszusammenhang gebracht wird.
Das Silicongel kann im nicht vernetzten Zustand eine flüssige Zweikomponenten-Siliconeinbettmasse mit folgenden Eigenschaften sein:
- beide Komponenten können im Verhältnis 1:1 gemischt werden,
- die Farbe kann klar/ eingefärbt sein (eine Einfärbung kann rot sein),
- das spezifische Gewicht kann bei +25°C 0,97 betragen,
- die Viskosität kann bei +25°C in mPa.s² 500 betragen
- der Volumenausdehnungskoeffizient nach 1 Stunde Vernetzung bei 150°C, in 1/K, kann 9,9 × 10⁻⁴ betragen.

Die Erfindung ist in der Zeichnung dargestellt und wird im folgenden näher beschrieben. Es zeigen
- Fig. 1: eine erste Ausführungsform eines Biegebalkensensors für einen Drucksensor in einer schematischen, perspektivischen Darstellung,
- Fig. 2: eine zweite Ausführungsform eines Biegebalkensensors für einen Drucksensor in einer schematischen, perspektivischen Darstellung,
- Fig. 3: eine dritte Ausführungsform eines Biegebalkensensors für einen Drucksensor in einer schematischen, perspektivischen Darstellung,
- Fig. 4: eine aus den Widerstandselementen eines Biegebalkensensors gemäß den Fig. 1 bis 3 gebildete Wheatstone-Brücke,
- Fig. 5: eine modifizierte Ausführungsform eines Biegebalkensensors gemäß Fig. 2 in einer schematisch dargestellten Draufsicht,
- Fig. 6: einen Drucksensor mit einem Biegebalkensensor gemäß Fig. 5 in einer schematisch dargestellten Draufsicht,
- Fig. 7: einen Schnitt durch einen Drucksensor gemäß Fig. 6 entlang der Linie VII - VII in einer schematischen, perspektivischen Darstellung,
- Fig. 8: einen weiteren Drucksensor mit einem eingespannten Biegebalkensensor gemäß Fig. 5 in einer schematischen, perspektivischen Schnittdarstellung und
- Fig. 9: eine Draufsicht auf die Schnittdarstellung eines Drucksensors gemäß Fig. 8 in einer schematischen Darstellung

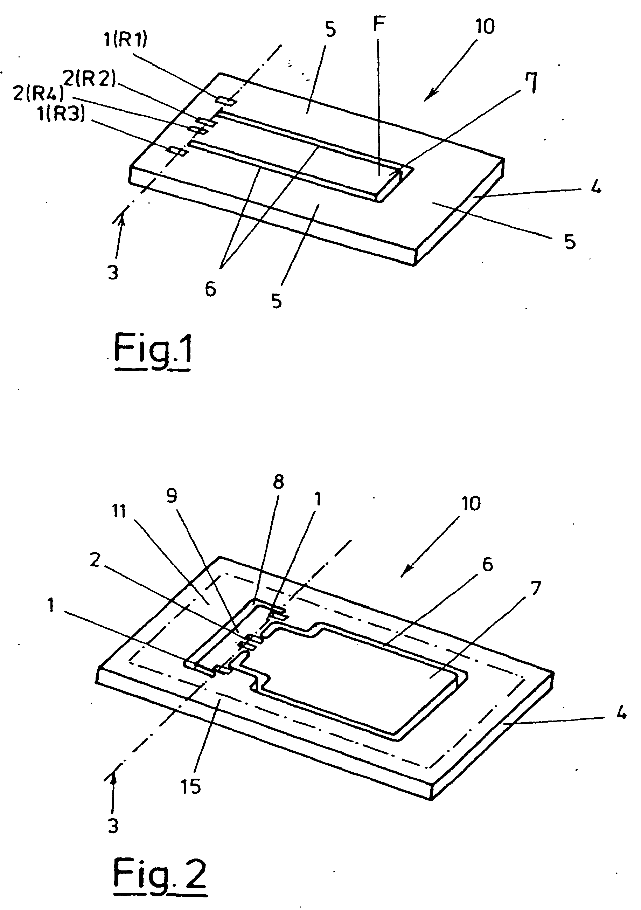

In Fig. 1 ist ein Biegebalkensensor 10 dargestellt. Er besteht aus einem Keramikplattenkörper 4, in den eine U-förmige Hauptzungen-Schnittlinie 6 bis zu einer Biegelinie 3 eingeschnitten ist. Die U-förmige Hauptzungen-Schnittlinie 6 schneidet eine Hauptzunge 7 aus.

In der Biegelinie 3 sind in einer links und rechts der Hauptzungen-Schnittlinie liegenden Streckzone jeweils ein Widerstand R1 und ein Widerstand R3 aufgebracht. In einer zwischen der Hauptzungen-Schnittlinie 6 liegenden Streckzone sind nebeneinander ebenfalls in der Biegelinie zwei Widerstände R2 und R4 aufgebracht. Mit 5 sind Kraftableitungspunkte bezeichnet, in denen eine Kraft F, die auf die Hauptzunge 7 wirkt, abgeleitet werden kann.

Der in Fig. 2 dargestellte Biegebalkensensor 10 unterscheidet sich von dem gemäß Fig. 1 dadurch, dass der durch die Hauptzungenschnittlinie 6 ausgeschnittenen Hauptzunge 7 eine Zusatzzunge 9 gegenüberliegt, die durch eine im wesentlichen U-förmige Zusatzzungen-Schnittlinie 8 aus dem Keramikplattenkörper 4 ausgeschnitten ist. Die Zusatzzunge 9 geht ebenfalls bis zur Biegelinie 3 und umfaßt die beiden Stauchzonen 1, in denen die Widerstände R1 und R3 aufgebracht sind. In der Streckzone sind die beiden Widerstände R2 und R3 aufgebracht. Die Hauptzungen-Schnittlinie 6 ist im Bereich der Biegelinie noch enger an die Streckzone 2 herangeführt.

Die Empfindlichkeit des Biegebalkensensors 10 gemäß Fig. 2 wird u. a. durch die Ein- und Ausschnitte im Bereich der Biegelinie bestimmt. Aus diesem Grunde ist die Hauptzungen-Schnittlinie sehr weit in die Streckzone 2 hineingeführt.

Der Keramikplattenkörper 4 des Biegebalkensensors 10 gemäß Fig. 2 hat eine Dicke von 0,1 bis 2 mm, eine Länge zwischen 5 mm und 50 mm und eine Breite von ebenfalls zwischen 5 mm und 50 mm.

Mit 11 ist ein Randflächenelement dargestellt, das durch eine Auflage- und Dichtfläche 15 begrenzt ist.

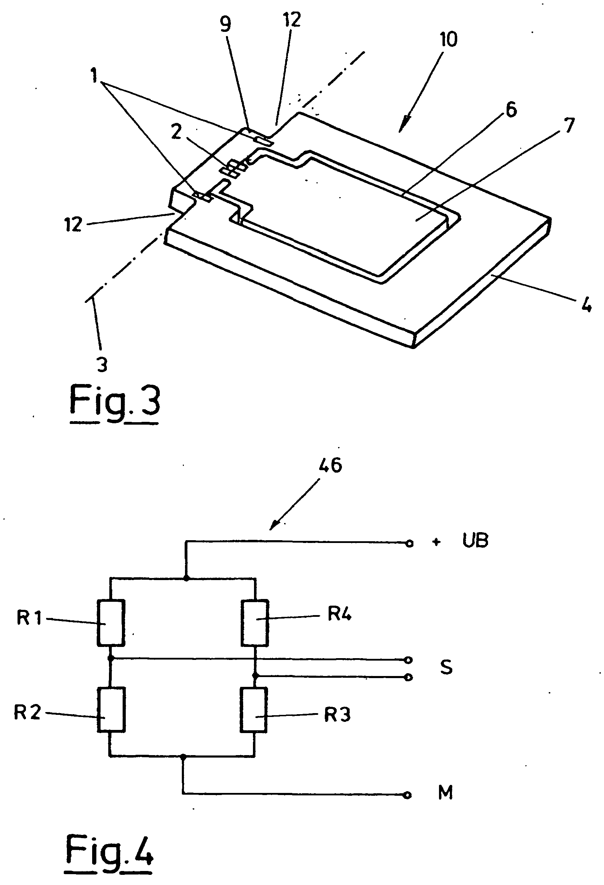

In Fig. 3 ist eine weitere Ausführungsform des Biegebalkensensors 10 gezeigt. Hier ist die Zusatzzunge 9 durch zwei gegenüberliegende Zusatzausschnittsausnehmungen 12 frei geschnitten. Der nun frei liegenden Zusatzzunge 9 liegt die in den Keramikplattenkörper 4 eingeschnittene Hauptzunge 7 gegenüber. In der Biegelinie 3 sind in der Stauchzone 1 und in der Streckzone 2 die Widerstände R1 und R2, R3 und R4 aufgebracht.

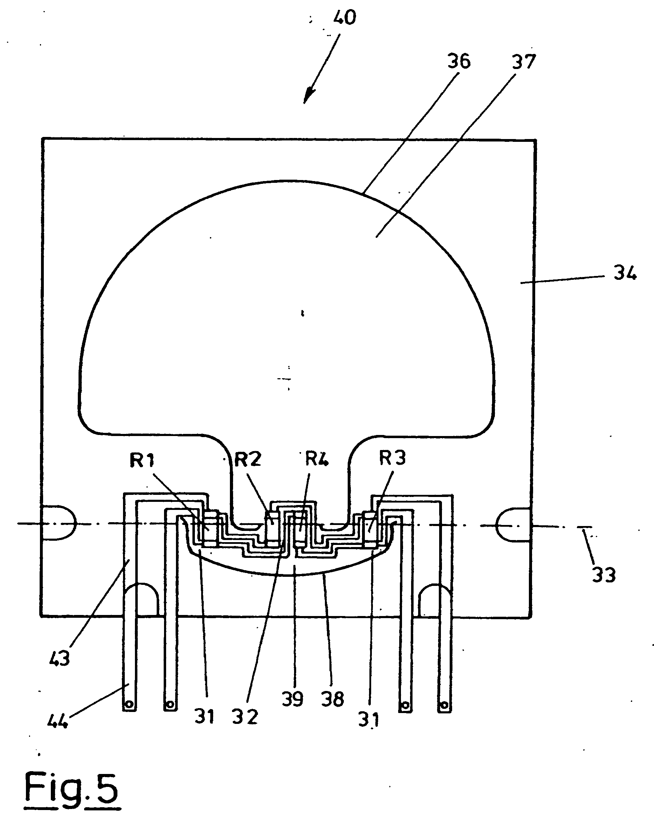

Fig. 5 zeigt einen Biegebalkensensor 40. Hier ist in einen im wesentlichen quadratischen Keramikplattenkörper 34 entlang einer Hauptzungen-Schnittlinie 36 eine Hauptzunge 37 und dieser gegenüberliegend entlang einer Zusatzzungen-Schnittlinie 38 eine Zusatzzunge 9 ausgeschnitten. Beide Zungen 37, 39 weisen eine zungenähnliche Konfiguration auf.

In einer mit 33 bezeichneten Biegelinie sind in der in der Mitte liegenden Streckzone 32 die Widerstände R2 und R4 und in den beiden außen liegenden Stauchzonen 31 jeweils die Widerstände R1 und R3 aufgebracht. Die Widerstände R1, R2, R3, R4 sind durch Leiterbahnen 43 verbunden, von denen Anschlußleitungen 44 nach außen führen.

Die Widerstände R1, R2 und R3 sowie die Leiterbahnen 43 werden auf den Keramikplattenkörper 4, 34 in Dickschichttechnik aufgebracht.

Die zusammengeschalteten Widerstände R1, R2, R3, R4 ergeben die in Fig. 4 dargestellte Wheatstone-Brücke 46.

Die Hauptzunge 7, 37 ergibt mit der Zusatzzunge 9, 39 einen sogenannten Biegebalken innerhalb eines zugehörigen Trägerkörperelements 4, 34, welcher so gestaltet ist, dass bei relativer Auslenkung der Hauptzunge gegenüber dem Trägerkörperelement durch die ausgeübte Abkraft F auf die Zusatzzunge im Bereich der Biegelinie 3, 33 u. a. auf der Oberfläche sowohl Druck- als auch Zugspannungen erzeugt werden.

Durch die Anordnung der zug- bzw. druckempfindlichen Widerstandselemente R1, R2, R3, R4 im Bereich der Biegelinie 3, 33 und die Verschaltung zur Wheatstone-Brücke 46 gemäß Fig. 4 erhält man den Biegebalkensensor 10, 40 der als Vorteile aufweist:
a) hohe Linearität
b) einen relativ einfachen Aufbau, da der Biegebalken im Keramikplattenkörper integriert ist und nicht zusätzlich befestigt werden muss, was in Abhängigkeit von der Verbindungsart zu Befestigungsproblemen sowie Nicht-Linearitäten, zu unerwünschten Temperaturabhängigkeiten und Driften des Ausgangssignals führen kann,
c) einen geringen Offset, da sich die Widerstandselemente R1, R2, R3 und R4 alle auf einer Seite des Keramikplattenkörpers 4, 34 befinden und bei entsprechender Gestaltung auch in geringem räumlichen Abstand zueinander angeordnet werden können, wodurch sich eine hohe Reproduzierbarkeit der Parameter bei einfacher kostengünstiger Technologie ergibt,
d) elektrische und mechanische Parameter, insbesondere das auftretende Biegemoment, in den Sensoren und die daraus resultierende Signalausbeute sowie die mechanische Auslenkung der Hauptzunge lassen sich auf einfache Weise durch Variation der Stegbreiten im Bereich der Biegelinie, auf denen sich die Widerstandselemente R1, R2, R3, R4 befinden, sowie durch die Form der Aussparungen, Materialauswahl und Materialdicke den praktischen Erfordernissen anpassen.

Durch eine entsprechende Gestaltung der Schnittlinien 6, 8 bzw. 36, 38 lassen sich Spannungsspitzen im Material des Keramikplattenkörpers 4, 34, die zu Rissen führen können, reduzieren.

Anstelle eines Keramikplattenkörpers 4, 34 können auch andere Trägermaterialien in Kombination mit geeigneten Widerstandsmaterialien Verwendung finden, z. B. Metallplatten mit aufgebrachten Dickschicht- und Dünnschicht-Widerständen oder Glas-, Keramik- und bei geringen Genauigkeitsanforderung auch Kunststoffplatten mit aufgebrachten Dehnmessstreifen.

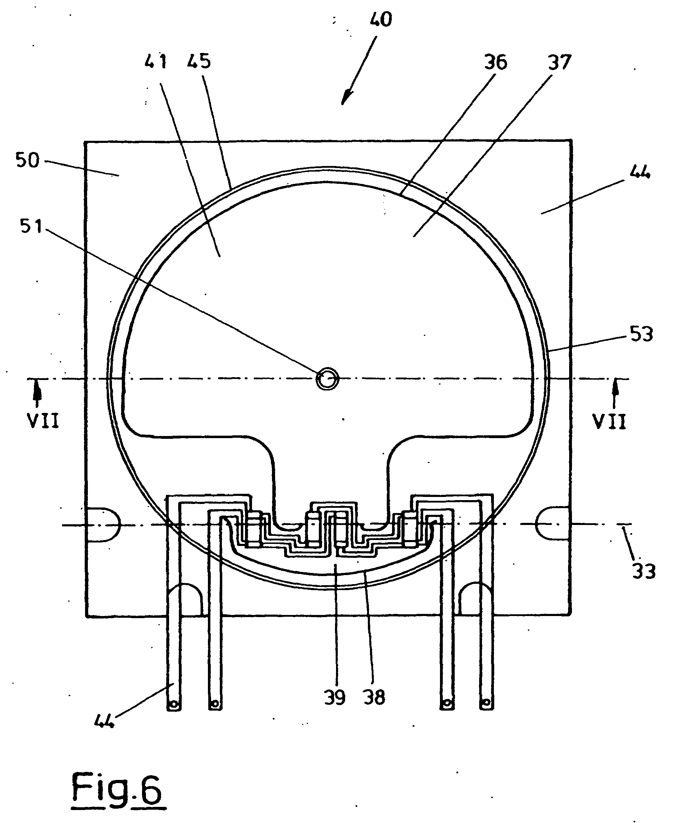

In den Fig. 6 bis 9 sind Aufbauten eines Drucksensors mit einem Biegebalkensensor insbesondere gemäß Fig. 5 gezeigt.

Der Biegebalkensensor 40 wie auch der Biegebalkensensor 10 aus Fig. 2 ist gegenüber aus den Fig. 1 und 3 durch einen Rand des Trägerkörperelement ergänzt, der damit ringförmig das Zungenelement 9, 39 mit den Widerstandselementen in der Form umschließt, dass die Widerstandselemente R1, R2, R3, R4 weitestgehend vom Trägerkörperelement mechanisch entkoppelt sind, so dass dieses ringförmige Randflächenelement 11 vorteilhaft als Auflage- und Dichtfläche 45 verwendet wird, insbesondere in Druckmesseinrichtungen.

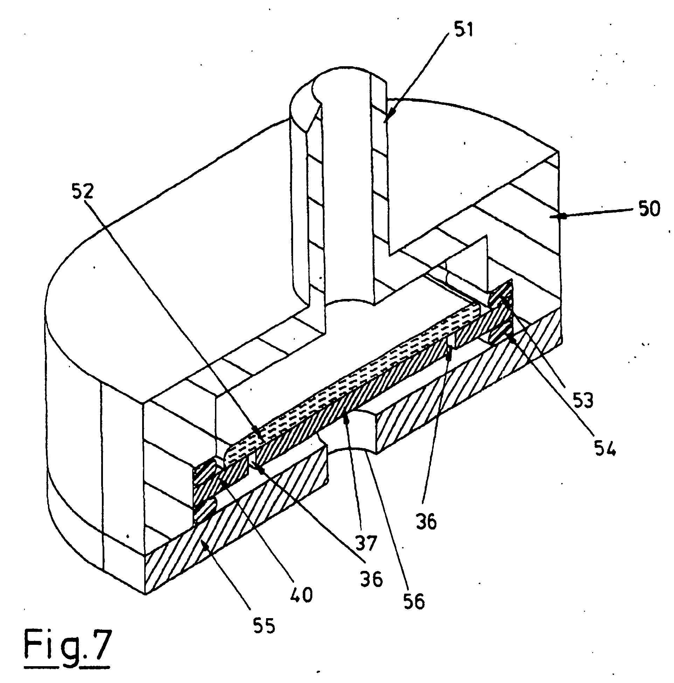

Wie die Fig. 6 und 7 zeigen, wird entlang der Auflage- und Dichtfläche 45 der Biegebalkensensor 40 zwischen zwei elastische Dichtungselemente 53, 54 eingespannt. Bei den elastischen Dichtungselementen handelt es sich jeweils um Ringdichtungselemente.

Wie insbesondere die Fig. 7 zeigt, drückt auf das Ringdichtungselement 53 ein Gehäusekörper 50, der in einen Anschlußhohlkörper 51 übergeht. Auf der gegenüberliegenden Seite wird das Ringdichtungselement 54 durch ein Basiskörperelement 55 angedrückt, in das zum Druckausgleich eine Basisausnehmung 56 eingebracht ist. Das Basiskörperelement 55 ist als Leiterplattenelement ausgebildet.

Erfindungswesentlich ist, dass auf den Biegebalkensensor 40 im Bereich des Ringdichtungselements 53 ein Gelschichtkörper 52 zur Abdichtung der Schnittlinien 36, 38 aufgebracht wird.

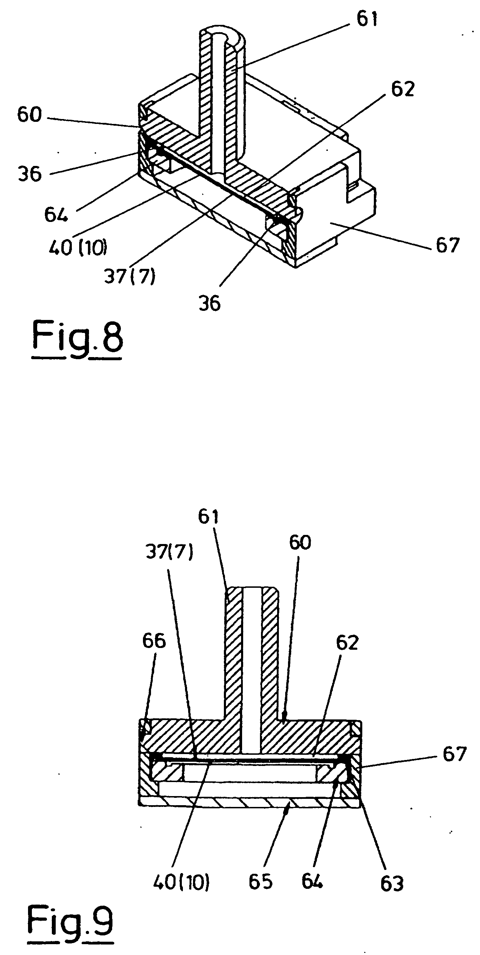

In den Fig. 8 und 9 ist eine weitere Aufbauvariante des Drucksensors dargestellt. Hier wird der Biegebalkensensor 40 mit seiner Auflagefläche auf ein Unterlegringelement 64 gelegt. Das Unterlegringelement kann vorteilhafterweise wegen der einfachen präzisen Herstellbarkeit und der hohen Steifigkeit aus Metall hergestellt sein. Das Unterlegringelement und der Biegebalkensensor 40 befinden sich in einem Gehäuse aus Kunststoff, das aus einem Deckelkörperelement 60 besteht, an das sich ein Anschlußhohlkörperelement 61 anschließt.

Auf der druckbeaufschlagten Seite des Biegebalkensensors 40 (vgl. Fig. 9) befindet sich ein elastisches Dichtungselement in Form eines Ringdichtungselements, welches durch das Dekkelkörperelement 60 vorgespannt wird, der in einem Deckelkörperwandelement 67 mit Schnappverbindungen 66 eingerastet wird. Diese Anordnung ergibt einen einfachen kostengünstigen Aufbau, der bezüglich der Beeinflussung des Sensorsignals durch äußere mechanische und thermische Einflüsse sehr robust ist. Ursache dafür ist die Verspannung des Sensorelements zwischen Dichtring und steifer Unterlegscheibe im Bereich des ringförmigen, von den Widerstandselementen R1, R2, R3, R4, entkoppelten Trägerelements 34.

Auf den Biegebalkensensor 40 wird ein Gelschichtkörper 62 aufgebracht, der von dem Dichtungsringelement 63 umfaßt ist und die Schnittlinien 36, 38 abdichtet.

Der Gelschichtkörper 62 besteht ebenso wie der Gelschichtkörper 52 aus einem dielektrischen Silicongel z. B. der Marke Sylgard 527 A & B. Hierbei handelt es sich um eine flüssige Zweikomponenten-Siliconeinbettmasse geringer Viskosität, die an sich speziell konzipiert ist zum Schutz der elektrischen Eigenschaften elektronischer Schaltkreise. Erfindungswesentlich ist, dass das Silikongel als Membran in einen vollkommen neuen Anwendungszusammenhang gebracht wird.

Das transparente Produkt vernetzt am Einsatzort zu einer polsternden und selbstheilenden sowie nachgiebigen gelartigen Masse, wenn die beiden Komponenten im Verhältnis 1 : 1 - nach Gewicht oder Volumen - gründlich vermischt werden.

Das vernetzte Gel behält die spannungsentlastenden und selbstheilenden Eigenschaften einer Flüssigkeit, verliert die Fließfähigkeit und entwickelt dabei die Dimensionsstabilität eines festen Elastomers. Die einzigartigen Eigenschaften bleiben bei extrem hohen und niedrigen Temperaturen erhalten und gehen auch dann nicht verloren, wenn das Material fortgesetzt bei Ruhetemperatur eingesetzt wird.

Typische Eigenschaften des Silicongel Sysgard 527 A & B sind weiterhin folgende
- Farbe: klar / rot (es kann auch anders eingefärbt sein)
- spezifisches Gewicht bei +25°C: 0,97
- Viskosität bei +25°C, mBa-Punkt s²: 500
- nicht flüssiger Anteil, zwei Stunden bei 150°C in %: 98,0
- Penetration, nach Vernetzung, bei +25°C, x10⁻³ mm: 50
- Volumenausdehnungskoeffizient, 1/K: 9,9 x 10⁻⁴
- Durchschlagsfestigkeit, nach Vernetzung bei +25°C; KV/mm: 17
- Dielektrizitätskonstante bei 100 Hz: 2,95 bei 100 kHz: 2,95
- Dielektrischer Verlustfaktor bei 100 Hz: 0,0025 bei 100 kHz: 0,00015
- Spezifischer Durchgangswiderstand, Ohm x cm: 2,33 x 10⁻¹⁵
- Lichtbogenfestigkeit, s 182.

Mit dem Gelschichtkörper 52, 62 erhält man in Verbindung mit den Zugelementen 37, 39 eine geschlossene Fläche, die als Druckmembran fungiert. Resultat ist ein Druckmesssensor, welcher den Biegebalkensensor und die Druckmembran zu einem Bauteil vereinigt. Die Hauptzungen- und Zusatzzungen-Schnittlinien können zur Optimierung der Signalausbeute, zur Anpassung an vorhandene Einbauverhältnisse und zur Vermeidung von Spannungsspitzen variiert werden.

Zur Signalverarbeitung ist das Basiskörperelement als Leiterplatte mit entsprechender Elektronik und den notwendigen Kontaktelementen an dem Gehäuse angeordnet.

Der beschriebene Drucksensor weist folgende Vorteile auf:
A) Hohe Linearität des durch einen Biegebalken (gebildet durch die Hauptzunge und die Zusatzzunge) erzeugten Signals im Gegensatz zur prinzipiellen nicht-linearen Kennlinie einer üblichen Druckmesszelle, bei der sich die Widerstandsmessbrücke auf einer Druckmembran befindet.
B) Einsparung einer zusätzlich nötigen Druckmembran, wenn der Druck mittels Biegebalken gemessen werden soll, wie bei bekannten Lösungen realisiert. Daraus resultiert ein kompakter und kostengünstiger Aufbau.
C) Die Eigenfrequenz ist wegen der geringen Balkenmasse höher als bei Lösungen mit Biegebalken und zusätzlicher Membran, was bei dynamischen Anwendungen vorteilhaft ist.
D) Kostengünstige Herstellung des Sensorelements durch die Möglichkeit, effektive Herstellungsverfahren wie Siebdruck auf Großkeramiken und preiswerte Keramikelemente der Massenfertigung zu verwenden.

Hinsichtlich der Ausgestaltung des Drucksensors bestehen noch Folgevariationsmöglichkeiten.

Anstelle der in Fig. 4 gezeigten Vollbrücke lassen sich prinzipiell auch Halbbrücken realisieren.

Die vorteilhaft dünnen Haupt- und Zusatzzungen-Schnittlinien können bei entsprechender mechanischer Dimensionierung in Verbindung mit entsprechend mechanisch festeren vergußmassen durch breitere Schlitze ersetzt werden.

Die U- und ringförmigen Trägerkörperelemente 4, 34 können prinzipiell an einer oder an mehreren Stellen unterbrochen sein.

Möglich ist auch der druckdichte Verschluß der Aussparungen mit einem entsprechend dimensionierten, flächig aufgebrachten Membrankörper. Diese Lösung hat gegenüber der Variante Biegebalken mit separater Druckmembran immer noch die Vorteile, dass der Aufbau erheblich einfacher ist und die Membran durch Einsparung sonst nötiger Stützelemente leichter und die Eigenfrequenz des Systems dadurch höher ist.

Das Unterlegringelement 64 kann, entsprechende Dimensionierung vorausgesetzt, Teil des Gehäuses sein. Die Überlastsicherung kann ebenfalls Teil des Gehäuses sein und muß nicht unbedingt in die Scheibe integriert werden. Bei Auftreten von Unterdruck kann sich eine Überlastsicherung auch im Deckelkörperelement 60 befinden. Zum Ausgleich von Fertigungstoleranzen kann die Überlastsicherung einstellbar sein, z. B. in Form einer Einstellschraube.

Bei Auftreten von höheren Drücken ist es sinnvoll, den Gehäusekörper und den Deckelkörper aus Metall zu fertigen. Die Verbindung zwischen Gehäuse und Deckel kann durch alle üblichen Verbindungsverfahren wie Schrauben, Bördeln, Schweißen, Kleben und dergleichen erfolgen.

Zur Messung von Relativdrücken, die unabhängig vom Umgebungsdruck sind, ist es möglich, auf beiden Seiten des Biegebalkensensors 10, 40 jeweils eine Druckkammer anzuordnen, d. h. das Basisträgerelement 55 wird wie der Gehäusekörper 50 druckdicht gestaltet und ebenfalls mit einem Anschlußhohlkörperelement versehen.

## Patentansprüche

1. Druckmessvorrichtung umfassend:
- ein Trägerkörperelement (4; 34) in einem wenigstens teilweise umschließenden Messgehäuse (50, 51; 60, 61),
- eine Hauptzunge (7; 37), die sich als Teil des Trägerkörperelements (4; 34) durch einen Hauptzungenschnitt entlang einer im wesentlichen U-förmigen Schnittlinie (6; 36) bis zu einer Biegelinie (3; 33) innerhalb des Trägerkörperelements (4; 34) ergibt und auf die im Verwendungsfall eine zu messende Kraft einwirkt,
- wenigstens ein Widerstandselement (R1, R2, R3, R4), das auf dem Trägerkörperelement (4; 34) in der Biegelinie (3; 33) und zu einer Seite der Schnittlinie (6, 8; 36, 38) angeordnet ist und
- wenigstens ein umlaufendes elastisches Dichtungselement (53, 54; 63, 64), das auf einer Auflage- und Dichtfläche (15; 45) des Trägerkörperelements (4; 34) aufgelegt ist,
**dadurch gekennzeichnet, dass**
gegenüberliegend zu der Hauptzunge (7; 37) entlang einer Zusatzzungen-Schnittlinie (8; 38) bis zur Biegelinie (3; 33) eine Zusatzzunge (9; 39) eingeschnitten ist, wobei die beiden Enden der Zusatzzungen-Schnittlinie (8; 38) außerhalb der beiden Enden der Hauptzungen-Schnittlinie (6; 36) auf die Biegelinie (3; 33) treffen und auf der Biegelinie zwischen je einem Ende der Zusatzzungen-Schnittlinie (8;38) und der Hauptzungen-Schnittlinie (6; 36) je eine Stauchzone (1; 31) und zwischen den beiden Enden der Hauptzungen-Schnittlinie (6; 36) eine Streckzone (2; 32) gebildet sind, und
wobei in der Streckzone (2; 32) und in wenigstens einer Stauchzone (1; 31) jeweils wenigstens ein Widerstandselement (R1, R2, R3, R4) angeordnet ist.

2. Druckmesskörper nach Anspruch 1, **dadurch gekennzeichnet, dass** wenigstens auf einer Auflage- und Dichtfläche (15; 45) des Trägerkörperelements (4; 34) ein umlaufendes elastisches Dichtungselement (53, 54; 63, 64) aufgelegt und ein Gelschichtkörper (52; 62) zur Abdichtung der Schnittlinien angeordnet ist.

3. Vorrichtung nach Anspruch 1, **dadurch gekennzeichnet, dass** die Haupt- und die Zusatzzungen-Schnittlinie eine Spaltdicke von 0,001 bis 2,0 mm aufweisen.

4. Vorrichtung nach Anspruch 1, **dadurch gekennzeichnet, dass** die Widerstandselemente (R1, R2, R3, R4) mit Leiterbahnen (43) verbunden sind.

5. Vorrichtung nach Anspruch 1 oder 4, **dadurch gekennzeichnet, dass** die Widerstandselemente (R1, R2, R3, R4) durch die Leiterbahnen (43) zu einer Wheatstone-Brücke (46) verbunden sind.

6. Vorrichtung nach einem der Ansprüche 1 bis 5, **dadurch gekennzeichnet, dass** die Widerstandselemente (R1, R2, R3, R4) und die Leiterbahnen (43) im Dickschicht-Verfahren auf das Trägerkörperelement (4; 34) aufgebracht sind.

7. Vorrichtung nach einem der Ansprüche 1 bis 5, **dadurch gekennzeichnet, dass** die Widerstandselemente (R1, R2, R3, R4) und die Leiterbahnen (43) im Dünnschicht-Verfahren auf das Trägerkörperelement (4; 34) aufgebracht sind.

8. Vorrichtung nach einem der Ansprüche 1 bis 4, **dadurch gekennzeichnet, dass** die Widerstandselemente (R1, R2, R3, R4) und die Leiterbahnen (43) als integrierter Schaltkreis hergestellt sind.

9. Vorrichtung nach einem der Ansprüche 1 bis 7, **dadurch gekennzeichnet,**
- **dass** ein erstes Trägerkörperelement (4; 34) eine erste Auflage- und Dichtfläche (15; 45) aufweist, wobei auf der ersten Auflage- und Dichtfläche (15; 45) ein erstes umlaufendes elastisches Dichtungselement (53) und wobei auf der der ersten Auflage- und Dichtfläche gegenüberliegenden Fläche ein zweites elastisches Dichtungselement (54) aufgelegt ist, und
- **dass** das Messgehäuseelement als ein Gehäusekörper (50) ausgebildet ist, der wenigstens teilweise durch ein erstes Basiskörperelement (55) verschlossen ist, wobei das erste Dichtungselement (53) vom Gehäusekörper (50) und das zweite Dichtungselement (54) vom ersten Basiskörperelement angedrückt ist.

10. Vorrichtung nach einem der Ansprüche 1 bis 8, **dadurch gekennzeichnet,**
- **dass** ein zweites Trägerkörperelements (4; 34) eine zweite Auflage- und Dichtfläche (15; 45) aufweist, wobei auf der zweiten Auflage- und Dichtfläche (15; 45) ein drittes umlaufendes elastisches Dichtungselement (63) und wobei auf der der zweiten Auflage- und Dichtfläche (15; 45) gegenüberliegenden Fläche ein umlaufendes Unterlegringelement (64) mit eingearbeitater Aussparung angeordnet ist, und
- **dass** das Gehäuseelement als ein Deckelkörperelement (60) ausgebildet ist, das gegenüber einem zweiten Basiskörperelement (65) angeordnet ist, wobei das dritte Dichtungselement (63) vom Deckelkörperelement (60) und das Unterlegringelement (64) vom zweiten Basiskörperelement (65) angedrückt ist.

11. Vorrichtung nach einem der Ansprüche 1 bis 10 **dadurch gekennzeichnet, dass** das Trägerkörperelement (4; 34) und die Zungen aus Keramik, Metall oder Silizium bestehen.

12. Vorrichtung nach einem der Ansprüche 9 oder 10, **dadurch gekennzeichnet, dass** der Gehäusekörper (50) und das Deckelkörperelement (60) einen Anschlußhohlkörper (51; 61) aufweisen.

13. Vorrichtung nach einem der Ansprüche 1 bis 12, **dadurch gekennzeichnet, dass** der Gelschichtkörper (52, 62) aus einem dielektrischen Silicongel besteht.

14. Vorrichtung nach Anspruch 13 **dadurch gekennzeichnet, dass** das Silicongel eine flüssige Zweikomponenten-Silicon-Einbettmasse mit folgenden Eigenschaften ist:
beide Komponenten sind im Verhältnis 1:1 gemischt,
Farbe: klar/rot
spezifisches Gewicht bei +25°C: 0,97
Viskosität bei +25°C: 500 mPa.s² ;
Volumenausdehnungskoeffizient nach einer Stunde Vernetzung bei 150°C, 9,9 x 10⁻⁴ x 1/K: .

## Claims

1. Pressure measurement apparatus comprising:
- a support body element (4; 34) in an at least partially surrounding measurement housing (50, 51; 60, 61);
- a main tongue (7; 37) which is produced as part of the support body element (4; 34) by cutting a main tongue along an essentially U-shaped cutting line (6; 36) as far as a bending line (3; 33) within the support body element (4; 34) and on which a force to be measured acts during use,
- at least one resistor element (R1, R2, R3, R4) which is arranged on the support body element (4; 34) in the bending line (3; 33) and to one side of the cutting line (6, 8; 36, 38) and
- at least one surrounding elastic sealing element (53, 54; 63, 64) which is placed on a seat and sealing area (15; 45) of the support body element (4; 34),
**characterised in that**
facing the main tongue (7; 37) an additional tongue (9; 39) is cut in along an additional tongue cutting line (8; 38) as far as the bending line (3; 33) wherein the two ends of the additional tongue cutting line (8; 38) meet the bending line (3; 33) outside of the two ends of the main tongue cutting line (6; 36) and **in that** a compression area (1; 31) is formed in each case on the bending line between an end of the additional tongue cutting line (8; 38) and an end of the main tongue cutting line (6; 36) and an expansion area (2; 32) is formed between the two ends of the main tongue cutting line (6; 36) and
wherein at least one resistor element (R1, R2, R3, R4) is arranged respectively in the expansion area (2; 32) and in at least one compression area (1; 31).

2. Pressure measurement body according to claim 1, **characterised in that** a surrounding elastic sealing element (53, 54; 63, 64) is placed and a gel layer body (52; 62) for sealing the cutting lines is arranged at least on a seat and sealing area (15; 45) of the support body element (4; 34).

3. Apparatus according to claim 1, **characterised in that** the main and the additional tongue cutting lines have an opening thickness of 0.001 to 2.0 mm.

4. Apparatus according to claim 1, **characterised in that** the resistor elements (R1, R2, R3, R4) are connected with conductor tracks (43).

5. Apparatus according to claim 1 or 4, **characterised in that** the resistor elements (R1, R2, R3, R4) are connected by the conductor tracks (43) to form a Wheatstone bridge (46).

6. Apparatus according to one of the claims 1 to 5, **characterised in that** the resistor elements (R1, R2, R3, R4) and the conductor tracks (43) are deposited on the support body element (4; 34) using the thick film technique.

7. Apparatus according to one of the claims 1 to 5, **characterised in that** the resistor elements (R1, R2, R3, R4) and the conductor tracks (43) are deposited on the support body element (4; 34) using the thin film technique.

8. Apparatus according to one of the claims 1 to 4, **characterised in that** the resistor elements (R1, R2, R3, R4) and the conductor tracks (43) are produced as an integrated circuit.

9. Apparatus according to one of the claims 1 to 7, **characterised in that**
- a first support body element (4; 34) has a first seat and sealing area (15; 45) wherein a first surrounding elastic sealing element (53) is placed on the first seat and sealing area (15; 45) and a second elastic sealing element (54) is placed on the area facing the first seat and sealing area, and
- the measurement housing element is constructed as a housing body (50) which is at least partially closed by a first base body element (55) wherein the housing body (50) presses against the first sealing element (53) and the first base body element presses against the second sealing element (54).

10. Apparatus according to one of the claims 1 to 8, **characterised in that**
- a second support body element (4; 34) has a second seat and sealing area (15; 45) wherein a third surrounding elastic sealing element (63) is arranged on the second seat and sealing area (15; 45) and a surrounding lower annular element (64) with an incorporated recess is arranged on the area facing the second seat and sealing area (15; 45), and
- the housing element is constructed as a lid body element (60) which is arranged facing a second base body element (65) wherein the lid body element (60) presses against the third sealing element (63) and the second base body element (65) presses against the lower annular element (64).

11. Apparatus according to one of the claims 1 to 10, **characterised in that** the support body element (4; 34) and the tongues are made of ceramics, metal or silicon.

12. Apparatus according to one of the claims 1 or 10, **characterised in that** the housing body (50) and the lid body element (60) have a hollow connecting body (51; 61).

13. Apparatus according to one of the claims 1 to 12, **characterised in that** the gel layer body (52; 62) is made of a dielectric silicone gel.

14. Apparatus according to claim 13, **characterised in that** the silicone gel is a liquid two-component silicone encapsulant with the following properties:
the two components are mixed according to a ratio of 1:1,
colour: clear / red,
specific weight at +25°C: 0.97,
viscosity at +25°C: 500 mPa.s²,
volume expansion coefficient after one hour of curing at 150°C, 9.9 x 10⁻⁴ x 1/k:.

## Revendications

1. Capteur de pression comprenant :
- un support (4 ; 34) logé dans un boîtier (50, 51 ; 60, 61) l'entourant au moins partiellement,
- une languette principale (7 ; 37) qui, en tant qu'élément du support (4 ; 34), résulte d'une découpe pratiquée à l'intérieur du support (4 ; 34) le long d'une ligne de coupe principale (6 ; 36) essentiellement en forme de U, jusqu'à une ligne de pliage (3 ; 33), et sur laquelle agit, en cas d'utilisation, une force qu'il s'agit de mesurer,
- au moins une résistance (R1, R2, R3, R4) agencée sur le support (4 ; 34), sur la ligne de pliage (3 ; 33) et latéralement par rapport à la ligne de coupe (6, 8 ; 36, 38)
- et au moins un joint d'étanchéité périphérique élastique (53, 54 ; 63, 64) posé sur une surface d'appui et d'étanchéité (15 ; 45) du support (4 ; 34),
**caractérisé en ce qu'**une languette secondaire (9 ; 39) est découpée face à la languette principale (7 ; 37), le long d'une ligne de coupe secondaire (8 ; 38), jusqu' à la ligne de pliage (3 ; 33), les deux extrémités de la ligne de coupe secondaire (8 ; 38) arrivant sur la ligne de pliage (3 ; 33) à l'extérieur des deux extrémités de la ligne de coupe principale (6 ; 36), **en ce qu'**il existe, sur la ligne de pliage, entre chacune des extrémités de la ligne de coupe secondaire (8 ; 38) et la ligne de coupe principale (6 ; 36), une zone de compression (1 ; 31) et entre les deux extrémités de la ligne de coupe principale (6 ; 36), une zone d'allongement (2 ; 32), et **en ce qu'**il est agencé au moins une résistance (R1, R2, R3, R4) dans la zone d'allongement (2 ; 32) et dans au moins une zone de compression (1 ; 31).

2. Capteur de pression selon la revendication 1, **caractérisé en ce qu'**un joint d'étanchéité périphérique élastique (53, 54 ; 63, 64) est posé au moins sur une surface d'appui et d'étanchéité (15 ; 45) du support (4 ; 34) et **en ce qu'**une couche de gel (52 ; 62) est disposée pour étanchéifier les lignes de coupe.

3. Dispositif selon la revendication 1, **caractérisé en ce que** la ligne de coupe principale et la ligne de coupe secondaire présentent une épaisseur de fente comprise entre 0,001 et 2,0 mm.

4. Dispositif selon la revendication 1, **caractérisé en ce que** les résistances (R1, R2, R3, R4) sont reliées par des pistes conductrices (43).

5. Dispositif selon la revendication 1 ou 4, **caractérisé en ce que** les résistances (R1, R2, R3, R4) sont reliées par un réseau conducteur (43) pour former un pont de Wheatstone (46).

6. Dispositif selon l'une quelconque des revendications 1 à 5, **caractérisé en ce que** les résistances (R1, R2, R3, R4) et les pistes conductrices (43) sont montées sur le support (4 ; 34) à l'aide de la technique des couches épaisses.

7. Dispositif selon l'une quelconque des revendications 1 à 5, **caractérisé en ce que** les résistances (R1, R2, R3, R4) et les pistes conductrices (43) sont montées sur le support (4 ; 34) à l'aide de la technique des couches minces.

8. Dispositif selon l'une quelconque des revendications 1 à 4, **caractérisé en ce que** les résistances (R1, R2, R3, R4) et les pistes conductrices (43) sont réalisées en tant que circuit intégré.

9. Dispositif selon l'une quelconque des revendications 1 à 7, **caractérisé en ce qu'**un premier support (4 ; 34) comprend une première surface d'appui et d'étanchéité (15 ; 45) sur laquelle est disposé un premier joint d'étanchéité périphérique élastique (53) tandis qu'un deuxième joint d'étanchéité (54) est disposé sur la surface opposée à la première surface d'appui et d'étanchéité (15 ; 45), **en ce que** le boîtier de capteur est réalisé en tant que boîtier (50) au moins partiellement fermé par un premier élément de fond (55) et **en ce que** le premier joint d'étanchéité (53) est comprimé par le boîtier (50) tandis que le deuxième joint d'étanchéité (54) est comprimé par le premier élément de fond (55).

10. Dispositif selon l'une quelconque des revendications 1 à 8, **caractérisé en ce qu'**un deuxième support (4 ; 34) comprend une deuxième surface d'appui et d'étanchéité (15 ; 45) sur laquelle est disposé un troisième joint d'étanchéité périphérique élastique (63) tandis que sur la surface opposée à la deuxième surface d'appui et d'étanchéité (15 ; 45), il est disposé une rondelle d'épaisseur périphérique (64) dans laquelle est ménagé un creux, **en ce que** le boîtier de capteur est réalisé en tant que couvercle (60) agencé face à un deuxième élément de fond (65) et **en ce que** le troisième joint d'étanchéité (63) est comprimé par le couvercle (60) tandis que la rondelle d'épaisseur (64) est comprimée par le deuxième élément de fond (65).

11. Dispositif selon l'une quelconque des revendications 1 à 10, **caractérisé en ce que** le support (4 ; 34) et les languettes sont en céramique, en métal ou en silicium.

12. Dispositif selon l'une quelconque des revendications 9 ou 10, **caractérisé en ce que** le boîtier (50) et le couvercle (60) comportent un corps creux adjacent (51 ; 61).

13. Dispositif selon l'une quelconque des revendications 1 à 12, **caractérisé en ce que** la couche de gel (52, 62) est réalisée avec un gel de silicone diélectrique.

14. Dispositif selon la revendication 13, **caractérisé en ce que** le gel de silicone est une substance d'incorporation fluide de silicone à deux composants dont les propriétés sont les suivantes :
Les deux composants sont mélangés selon une proportion de 1 : 1.
Couleur : transparent / rouge
Poids spécifique à +25 degrés Celsius : 0,97
Viscosité à +25 degrés Celsius : 500 mPa.s²
Coefficient de dilatation cubique après une heure de réticulation à 150 degrés Celsius, 9,9 x 10⁻⁴ x 1/K:.
